# EUROPEAN PATENT SPECIFICATION

(11) **EP 3 381 292 B1**
(45) Date of publication and mention of the grant of the patent: **27.12.2023**
(21) Application number: 16868094.0
(22) Date of filing: 28.11.2016
(51) Int. Cl.: A23C 9/00, A23C 9/12, A23C 9/152, A23C 9/156, A23L 2/38, A23L 2/66, A23C 9/13, A23C 9/133, A23C 9/137

(54) **MILKY BEVERAGE, METHOD FOR PRODUCING MILKY BEVERAGE, AND METHOD FOR IMPROVING FLAVOR OF MILKY BEVERAGE**
MILCHIGES GETRÄNK, VERFAHREN ZUR HERSTELLUNG EINES MILCHIGEN GETRÄNKS UND VERFAHREN ZUR VERBESSERUNG DES GESCHMACKS EINES MILCHIGEN GETRÄNKS
BOISSON LACTÉE, PROCÉDÉ DE PRODUCTION D'UNE BOISSON LACTÉE, ET PROCÉDÉ D'AMÉLIORATION DU GOÛT D'UNE BOISSON LACTÉE

(30) Priority: 26.11.2015 JP 2015230454
(43) Date of publication of application: 03.10.2018
(73) Proprietor: The Coca-Cola Company, Atlanta, GA 30313 (US)
(72) Inventor: NAKAMURA, Mayumi, Tokyo 150-0002 (JP)
(74) Representative: Dehns
(86) International application number: PCT/IB2016/001791
(87) International publication number: WO 2017/089893

(56) References cited:
- WO-A1-2015/111357
- CN-A- 1 061 512
- CN-A- 104 950 046
- JP-A- H0 799 885
- JP-A- H0 819 367
- JP-A- H09 149 762
- US-A- 3 535 117
- US-A1- 2017 006 889
- US-B1- 6 358 521
- DATABASE GNPD [Online] MINTEL; 12 January 2005 (2005-01-12), anonymous: "Amino Drink", XP055572019, retrieved from www.gnpd.com Database accession no. 331032
- DATABASE GNPD [Online] MINTEL; 13 August 2004 (2004-08-13), anonymous: "Amino Orange Yogurt Drink", XP055572006, retrieved from www.gnpd.com Database accession no. 292731
- DATABASE WPI Week 201378 Thomson Scientific, London, GB; AN 2013-U09912 XP002789918, & WO 2013/164982 A1 (KIRIN KYOWA FOODS CO LTD) 7 November 2013 (2013-11-07)
- DATABASE WPI Week 201448 Thomson Scientific, London, GB; AN 2014-M92893 XP002789919, & JP 2014 124171 A (MC FOOD SPECIALTIES INC) 7 July 2014 (2014-07-07)

## Description

### [Technical Field]

The present invention relates to a milky beverage, a method for producing a milky beverage and a method for improving the flavor of a milky beverage.

### [Background Art]

In Japan, the definitions of cows milk and dairy products are stipulated in "Ministerial Ordinance concerning the Ingredient Standards for Milk and Dairy Products" (for example, see Non-Patent Document 1). This ministerial ordinance is generally referred to as "Ministerial Ordinance on Milk etc.". In addition, the basis for milk and dairy component standards and production methods is stipulated in Attached Table 2 "Compositional Standards and Standards of Manufacturing, Cooking, and Storing Condition of Milk, etc." in this ordinance.

In the Ministerial Ordinance on Milk etc., "fermented milk" is defined as meaning "products which are obtained by fermenting milk, or milk etc. containing an equal or greater amount of non-fat milk solids with lactic acid bacteria or yeast and then forming a paste or liquid, or a frozen product". With respect to compositional standards of fermented milk, attached Table 2 of this ordinance stipulates that "the non-fat milk solids content is a minimum of 8.0% and the lactic acid bacteria count or yeast count (per 1 mL) is a minimum of 1,000,000, but this does not apply to products which, after fermentation, are either heated at not lower than 75°C for 15 minutes or pasteurized by heating having an equal or greater pasteurization effect. Coliform bacteria: negative".

Furthermore, with respect to standards for manufacturing fermented milk, Attached Table 2 of this ordinance stipulates that "a. Raw water for fermented milk shall be potable water. b. Raw materials for fermented milk (excluding lactic acid bacteria, yeast, fermented milk and fermented milk drinks) shall either be pasteurized by heating at 63°C for 30 minutes using a holding method or by heating by a method having an equal or greater pasteurization effect". As is clear from these compositional standards, "fermented milk" products are dairy products in the form of soft solid yogurts or thick liquid products.

In the Ministerial Ordinance on Milk etc., "lactic acid bacteria beverages" are defined as meaning "drinks which are obtained by fermenting milk etc. with lactic acid bacteria or yeast and then processing it or using it as the principal ingredient (excluding fermented milk)". With respect to compositional standards for lactic acid bacteria beverages (those containing a minimum of 3.0% non-fat milk solids), attached Table 2 of this ordinance stipulates that "the lactic acid bacteria count or yeast count (per 1 mL) is a minimum of 1,000,000, but this does not apply to products which, after fermentation, are either heated at not lower than 75°C for 15 minutes or pasteurized by heating having an equal or greater pasteurization effect. Coliform bacteria: negative".

Furthermore, with respect to standards for manufacturing lactic acid bacteria beverages (those containing a minimum of 3.0% non-fat milk solids), attached Table 2 of this ordinance stipulates that "a. Raw water used in the manufacture of a stock solution of a lactic acid bacteria beverage shall be potable water. b. Raw materials used in the manufacture of a stock solution of a lactic acid bacteria beverage (excluding lactic acid bacteria and yeast) shall either be pasteurized by heating at 63°C for 30 minutes using a holding method or by heating by a method having an equal or greater pasteurization effect. c. Water etc. used for diluting a stock solution of a lactic acid bacteria beverage shall either be boiled for not less than 5 minutes or pasteurized by an operation having an equal or greater pasteurization effect immediately before use".

Furthermore, with respect to compositional standards for lactic acid bacteria beverages (those containing less than 3.0% non-fat milk solids), attached Table 2 of this ordinance stipulates that "the lactic acid bacteria count or yeast count (per 1 mL) is a minimum of 1,000,000, and coliform bacteria: negative". This ordinance stipulates that standards for manufacturing lactic acid bacteria beverages (those containing less than 3.0% non-fat milk solids) are "the same as for lactic acid bacteria beverages (those containing not less than 3.0% non-fat milk solids)".

For example, in the case of yogurt flavored drinks, those which contain less than 3.0% of non-fat milk solids and contain less than 1 ,000,000 lactic acid bacteria or yeast cells per 1 mL do not correspond to "fermented milk" or "lactic acid bacteria beverages" as defined in the Ministerial Ordinance on Milk etc., and are classified as "soft drinks". Such "soft drinks" are also known as "milky beverages". In Japan, for example, fermented milk can only be produced using a special production line for which government approval has been granted. However, soft drinks can be produced using ordinary production lines, and do not require government approval.

Fermented milk contains amino acids, for example several milligrams of proline per 100 g. Proline is produced in milk fermentation processes. However, because the minimum concentration at which the flavor of proline can be detected is reported as being 300 mg/100 g (for example, see Non-Patent Document 2), it has been reported that amino acids hardly contribute to the taste of fermented milk (for example, see Non-Patent Document 3). Suppression of soybean flavor by amino acids in sour milk beverages prepared from skim milk solids and soybean proteins are reported in the Patent Document.

### [Prior Art Documents]

### [Non-Patent Documents]

[Non-Patent Document 1] Hajime ITO, "Dairy Manufacturing Science", Korin Publishing Co., Ltd., 28 February 2007, Reprint
[Non-Patent Document 2] Ajinomoto Co., Inc. "Amino Acids Handbook", Kogyo Chosakai Publishing Co., Ltd., 20 February 2005, first edition, fourth printing, pages 46-47
[Non-Patent Document 3] Masato OMAE et al., "Sensory Properties and Taste Compounds of Fermented Milk Produced by Lactococcus and Streptococcus thermophilus", Food Sci. Technol. Res., 14(2), 183-189, 2008 [Patent Document] US3535117A (YAMANAKA, YET AL.) 20 October 1970

### [Summary of Invention]

### [Problem to be Solved by the Invention]

Compared to relatively concentrated fermented milk and lactic acid bacteria beverages, milky beverages have a light mouthfeel and have become widely accepted as soft drinks. However, some consumers prefer the taste of fermented milk to the taste of milky beverages. Therefore, the inventors of the present invention carried out diligent research into obtaining the taste of fermented milk in a milky beverage, and surprisingly found that by adding proline, which had been thought in the past to hardly contribute to the taste of fermented milk, to a milky beverage, the milky beverage had the taste of fermented milk and became flavorful. As a result, an objective of the present invention is to provide a flavorful milky beverage, a method for producing a milky beverage and a method for improving the flavor of a milky beverage.

### [Means for Solving the Problem]

Provided by a mode of the present invention is a proline-containing milky beverage. This milky beverage may have the flavor of fermented milk. This milky beverage comprises a low milk content of less than 3.0% of non-fat milk solids and less than 1,000,000 lactic acid bacteria or yeast cells per 1 mL. This milky beverage may be a yogurt flavored soft drink. Alternatively, this milky beverage may be a soft drink having a combined flavor of yogurt and fruit. This milky beverage does not contain amino acids other than proline. This milky beverage can be stored at ordinary temperatures.

This milky beverage contains 0.0010-0.0600 g of proline per 100 g of the milky beverage.

This milky beverage may contain 0.0060-0.0300 g of proline per 100 g of the milky beverage. In such cases, the milky beverage may be a non-carbonated beverage.

This milky beverage may contain 0.0060-0.0120 g of proline per 100 g of the milky beverage. In such cases, the milky beverage may be a carbonated beverage.

Provided by another mode of the present invention is a method for producing a milky beverage, the method including (a) a step of preparing a milky beverage material and (b) a step of adding proline to the milky beverage material. Here, milky beverage material means a milky beverage that does not contain proline. Proline is added to the milky beverage material so that a produced milky beverage has a fermented milk flavor.

In this method for producing a milky beverage, a produced milky beverage has a low milk content comprising less than 3.0% of non-fat milk solids and less than 1,000,000 lactic acid bacteria or yeast cells per 1 mL. In addition, a produced milky beverage may be a yogurt flavored soft drink. Alternatively, a produced milky beverage may be a soft drink having a combined flavor of yogurt and fruit. A produced milky beverage does not contain amino acids other than proline. A produced milky beverage can be stored at ordinary temperatures.

In this method for producing a milky beverage, proline is added to the milky beverage material so that a produced milky beverage contains 0.0010-0.0600 g of proline per 100 g of the milky beverage.

In this method for producing a milky beverage, proline may be added to the milky beverage material so that a produced milky beverage contains 0.0060-0.0300 g of proline per 100 g of the milky beverage. In such cases, a produced milky beverage may be a non-carbonated beverage.

In this method for producing a milky beverage, proline may be added to the milky beverage material so that a produced milky beverage contains 0.0060-0.0120 g of proline per 100 g of the milky beverage. In such cases, a produced milky beverage may be a carbonated beverage.

Provided by a further mode of the present invention is a method for improving the flavor of a milky beverage, the method including (a) a step of preparing a milky beverage and (b) a step of adding proline to the milky beverage. Proline is added to the milky beverage so that the milky beverage has a fermented milk flavor.

In this method for improving the flavor of a milky beverage, the milky beverage comprises a low milk content of less than 3.0% of non-fat milk solids and less than 1,000,000 lactic acid bacteria or yeast cells per 1 mL. In addition, the milky beverage may be a yogurt flavored soft drink. Alternatively, the milky beverage may be a soft drink having a combined flavor of yogurt and fruit. The milky beverage does not contain amino acids other than proline. The milky beverage can be stored at ordinary temperatures.

In this method for improving the flavor of a milky beverage, proline is added to the milky beverage so that the milky beverage contains 0.0010-0.0600 g of proline per 100 g of the milky beverage.

In this method for improving the flavor of a milky beverage, proline may be added to the milky beverage so that the milky beverage contains 0.0060-0.0300 g of proline per 100 g of the milky beverage. In such cases, the milky beverage may be a non-carbonated beverage.

In this method for improving the flavor of a milky beverage, proline may be added to the milky beverage so that the milky beverage contains 0.0060-0.0120 g of proline per 100 g of the milky beverage. In such cases, the milky beverage may be a carbonated beverage.

### [Advantageous Effects of Invention]

According to the present invention, it is possible to provide a flavorful milky beverage, a method for producing a milky beverage and a method for improving the flavor of a milky beverage.

### [Brief Description of Drawings]

FIG. 1 is a table showing results of Working Example 1.
FIG. 2 is a table showing the composition of a non-carbonated milky beverage according to Working Example 2.
FIG. 3 is a table showing results of Working Example 2.
FIG. 4 is a table showing results of Working Example 3.
FIG. 5 is a table showing the composition of a carbonated milky beverage according to Working Example 4.
FIG. 6 is a table showing results of Working Example 4.
FIG. 7 is a table showing results of Working Example 5.

### [Mode for Carrying Out the Invention]

Embodiments of the present invention will now be explained. However, it should not be understood that statements and drawings that form parts of these disclosures limit the invention. A variety of alternative embodiments, examples and operational techniques should be clear to a person skilled in the art from these disclosures. Therefore, it should be understood that the present invention encompasses a variety of embodiments etc. that are not disclosed here.

A milky beverage of the present invention is a proline-containing milky beverage. The milky beverage may have a fermented milk flavor. The milky beverage comprises a low milk content of less than 3.0% of non-fat milk solids, and contains fewer than 1,000,000 lactic acid bacteria or yeast cells per 1 mL. In addition, the milky beverage according to this embodiment may be a yogurt flavored soft drink. Alternatively, the milky beverage may be a soft drink having a combined flavor of yogurt and fruit. A fruit flavor may be obtained by adding pulp, skin, juice, or the like, of a fruit, and may also be obtained by adding a flavor (food additive) that imparts a fruit flavor. The fruit may be tangerine, orange, grapefruit, grape, blueberry, plum, peach, melon, apple, pineapple, strawberry, cherry, kiwi, or the like, but is not limited to these. In addition, the milky beverage may be a soft drink having a flavor obtained by combining yogurt with powdered green tea, brown sugar syrup, maple syrup, or the like. Furthermore, the milky beverage does not contain amino acids other than proline.

The milky beverage according to this embodiment contains 0.0010-0.0600 g of proline per 100 g of the milky beverage. By setting the content of proline to fall within this range, the milky beverage tends to have a fermented milk flavor. Alternatively, the milky beverage may contain 0.0060-0.0300 g of proline per 100 g of the milky beverage. In such cases, the milky beverage may be a non-carbonated beverage. Alternatively, the milky beverage may contain 0.0060-0.0120 g of proline per 100 g of the milky beverage. In such cases, the milky beverage may be a carbonated beverage.

"Fermented milk" means a product which contains, for example, a minimum of 8.0% of non-fat milk solids, is obtained through fermentation with lactic acid bacteria or yeast, and contains a minimum of 10⁷ lactic acid bacteria or yeast cells per 1 mL.

A "lactic acid bacteria beverage" is, for example, a beverage containing less than 8.0% of non-fat milk solids. Among "lactic acid bacteria beverages", those containing a minimum of 3.0% of non-fat milk solids and containing a minimum of 10⁷ lactic acid bacteria or yeast cells per 1 mL are also known as "dairy product lactic acid bacteria beverages". Among "lactic acid bacteria beverages", those which contain a minimum of 3.0% of non-fat milk solids and in which lactic acid bacteria or yeast cells are killed by sterilization are also known as "(sterilized) dairy product lactic acid bacteria beverages". Among "lactic acid bacteria beverages", those which contain less than 3.0% of non-fat milk solids and contain a minimum of 10⁶ lactic acid bacteria or yeast cells per 1 mL are also known as "lactic acid bacteria beverages containing mainly milk etc.".

"Milky beverages" are beverages which contain less than 3.0% of non-fat milk solids and contain fewer than 1,000,000 lactic acid bacteria or yeast cells per 1 mL, do not correspond to "fermented milk" or "lactic acid bacteria beverages", and are classified as "soft drinks". "Milky beverages" have a low milk content, and can therefore be stored at ordinary temperatures. Ordinary temperatures means, for example, 0-40°C, 0-35°C or 0-30°C.

The milky beverage is produced by preparing a milky beverage material, which is a milky beverage that does not contain proline, and adding proline to the milky beverage material so that the produced milky beverage contains 0.0010-0.0600 g of the amino acid proline per 100 g of the milky beverage. In Japan, for example, fermented milk can only be produced using a special production line for which government approval has been granted. However, proline-containing milky beverages are soft drinks, and can therefore be produced using ordinary production lines and do not require government approval.

The milky beverage that does not contain proline may be a commercially available milky beverage. By preparing a commercially available milky beverage and adding proline to this commercially available milky beverage, the flavor of the milky beverage is improved and the milky beverage has a fermented milk flavor.

### (Working Example 1)

Samples of the following fermented milk beverages and lactic acid bacteria beverages were procured. All of these were beverages having different brand names.
Commercially available fermented milk beverage 1 (yogurt drink, able to be transported if refrigerated)
Commercially available fermented milk beverage 2 (yogurt drink, able to be transported if refrigerated)
Commercially available fermented milk beverage 3 (yogurt drink, able to be transported if refrigerated)
Commercially available fermented milk beverage 4 (yogurt drink, able to be transported if refrigerated)
Commercially available lactic acid bacteria beverage 1 (able to be transported if refrigerated)
Commercially available lactic acid bacteria beverage 2 (able to be transported if refrigerated)
Commercially available lactic acid bacteria beverage 3 (able to be transported if refrigerated)

In addition, samples of the following milky beverages were procured or prepared. All of these were beverages having different brand names.
Commercially available milky beverage 1 (soft drink, able to be transported at ordinary temperatures)
Commercially available milky beverage 2 (soft drink, able to be transported at ordinary temperatures)
Commercially available milky beverage 3 (soft drink, able to be transported at ordinary temperatures)
Commercially available milky beverage 4 (soft drink, able to be transported at ordinary temperatures)
Prototype prepared by the inventor of the present invention (soft drink, non-fat milk solids: 1.2%, milk fat: 0.2%, able to be transported at ordinary temperatures)

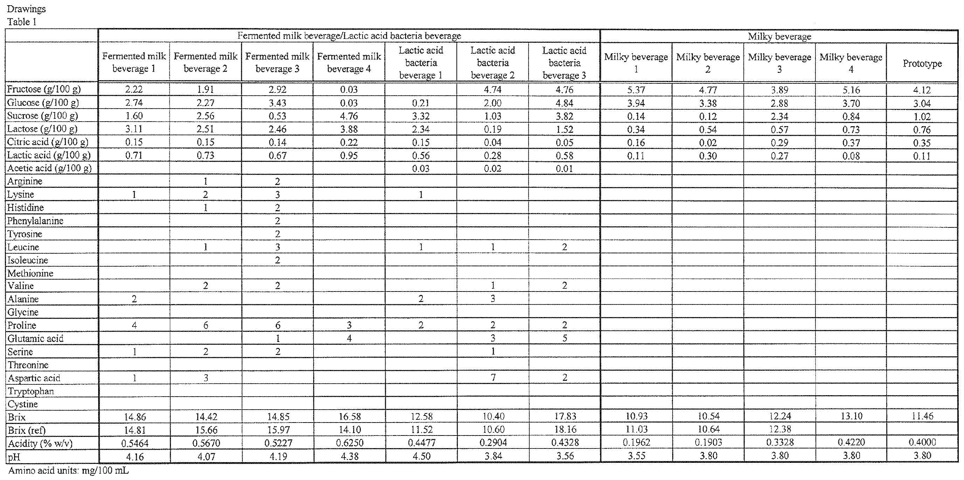

The compositions of the procured or prepared samples were analyzed. Analysis of sugars and acids was carried out by high performance liquid chromatography (using a LC-20AD manufactured by Shimadzu Corporation). Analysis of amino acids was carried out using a high-speed amino acid analyzer (L-8800 manufactured by Hitachi High-Technologies Corporation). Brix analysis was carried out in an oscillation period method using a DA-310C manufactured by Kyoto Electronics Manufacturing Co., Ltd. Brix (Ref) analysis was carried out by refractive index measurements using a RX-5000α manufactured by Atago Co., Ltd. Acidity analysis was carried out using an AT-510 manufactured by Kyoto Electronics Manufacturing Co., Ltd. pH analysis was carried out using a HM-30G manufactured by DKK-TOA Corporation. The results are shown in FIG. 1.

In all of these fermented milk beverages and lactic acid bacteria beverages, the content of lactic acid was greater than the content of citric acid. In the milky beverages, however, the content of lactic acid was lower than the content of citric acid, except in commercially available milky beverage 2.

Amino acids were detected in the fermented milk beverages and lactic acid bacteria beverages. Lysine, leucine, valine, alanine, proline, serine and aspartic acid were detected in 3 or more fermented milk beverages or lactic acid bacteria beverages. However, amino acids were not detected in the milky beverages.

The pH values of the fermented milk beverages and lactic acid bacteria beverages were higher than the pH values of the milky beverages.

### (Working Example 2)

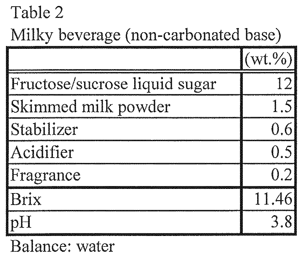

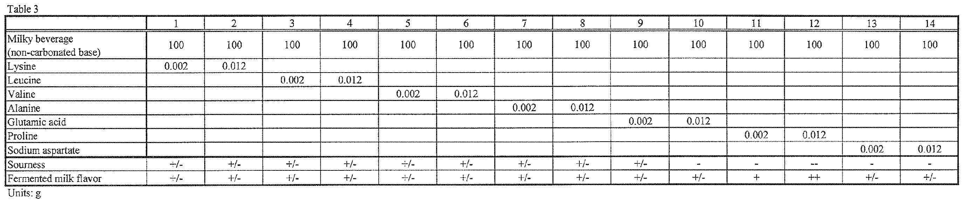

A non-carbonated milky beverage which had the composition shown in FIG. 2 and contained no amino acids was prepared. This non-carbonated milky beverage was the same as the prototype shown in FIG. 1. Citric acid and lactic acid were used as acidifiers. Carboxymethyl cellulose (CMC), pectin and xanthan gum were used as stabilizers. Amino acids were added to the non-carbonated milky beverage so that 0.002 g or 0.012 g of the amino acids shown in FIG. 3 were contained per 100g of the prepared non-carbonated milky beverages. The sourness and fermented milk flavor of the amino acid-containing non-carbonated milky beverages were functionally evaluated by 5 panelists experienced in beverage evaluation.

In FIG. 3, "+/-" for sourness indicates that the sourness was not altered by the addition of the amino acid. "-" for sourness indicates that sourness was suppressed by the addition of the amino acid. "--" for sourness indicates that sourness was more suppressed by the addition of the amino acid.

In FIG. 3, "+/-" for fermented milk flavor indicates that the flavor was not altered by the addition of the amino acid. "+" for fermented milk flavor indicates that the fermented milk flavor was enhanced by the addition of the amino acid. "++" for fermented milk flavor indicates that the fermented milk flavor was more enhanced by the addition of the amino acid.

As shown in FIG. 3, even when amino acids other than proline (lysine, leucine, valine, alanine, glutamic acid and sodium aspartate) were added to a milky beverage, the fermented milk flavor was not enhanced, but by adding proline to a milky beverage, sourness was suppressed and the fermented milk flavor was enhanced.

### (Working Example 3)

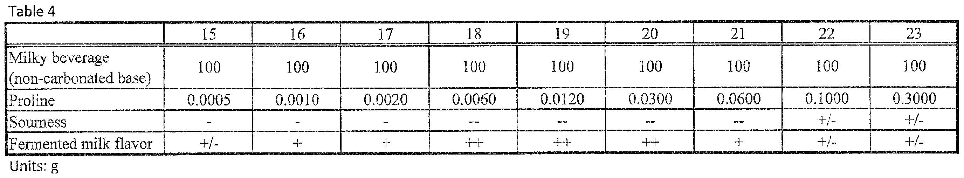

Proline was added to the same non-carbonated milky beverage as that used in Working Example 2 so that the content of proline was 0.0005 g, 0.0010 g, 0.0020 g, 0.0060 g, 0.0120 g, 0.0300 g, 0.0600 g, 0.1000 g or 0.3000 g per 100 g of the milky beverage, as shown in FIG. 4. The sourness and fermented milk flavor of these proline-containing non-carbonated milky beverages were functionally evaluated by the same 5 panelists as in Working Example 2. The evaluation criteria were the same as in Working Example 2.

The results showed that in cases where the content of proline was 0.0010 g or 0.0020 g per 100 g of the non-carbonated milky beverage, the sourness was evaluated as "-" and the fermented milk flavor was evaluated as "+". In cases where the content of proline was 0.0060 g, 0.0120 g or 0.0300 g per 100 g of the non-carbonated milky beverage, the sourness was evaluated as "--" and the fermented milk flavor was evaluated as "++". In cases where the content of proline was 0.0600 g per 100 g of the non-carbonated milky beverage, the sourness was evaluated as "--" and the fermented milk flavor was evaluated as "+".

### (Working Example 4)

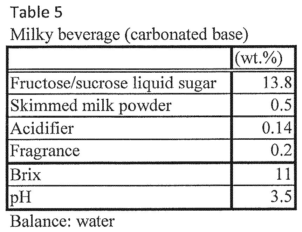

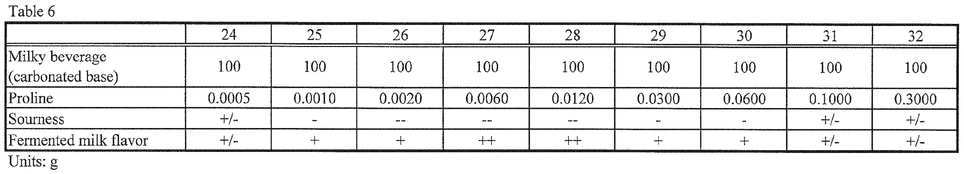

A carbonated milky drink which had the composition shown in FIG. 5 and which did not contain amino acids was prepared. Proline was added to the prepared carbonated milky beverage so that the content of proline was 0.0005 g, 0.0010 g, 0.0020 g, 0.0060 g, 0.0120 g, 0.0300 g, 0.0600 g, 0.1000 g or 0.3000 g per 100 g of the milky beverage, as shown in FIG. 6. The sourness and fermented milk flavor of these proline-containing carbonated milky beverages were functionally evaluated by the same 5 panelists as in Working Example 2. The evaluation criteria were the same as in Working Example 2.

In cases where the content of proline was 0.0010 g per 100 g of the carbonated milky beverage, the sourness was evaluated as "-" and the fermented milk flavor was evaluated as "+". In cases where the content of proline was 0.0020 g per 100 g of the carbonated milky beverage, the sourness was evaluated as "--" and the fermented milk flavor was evaluated as "+". In cases where the content of proline was 0.0060 g or 0.0120 g per 100 g of the carbonated milky beverage, the sourness was evaluated as "--" and the fermented milk flavor was evaluated as "++". In cases where the content of proline was 0.0300 g or 0.0600 g per 100 g of the carbonated milky beverage, the sourness was evaluated as "-" and the fermented milk flavor was evaluated as "+".

### (Working Example 5)

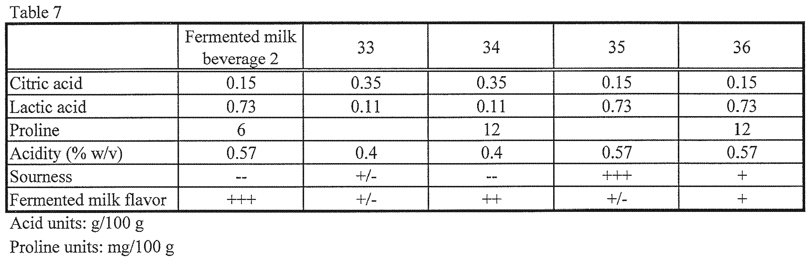

Commercially available fermented milk beverage 2 was prepared in the same way as in Working Example 1. In addition, a non-carbonated milky beverage was prepared in the same way as in Working Example 2. Furthermore, samples 33 to 36 were obtained by adjusting the content of citric acid and lactic acid in non-carbonated milky beverages as shown in FIG. 7. The sourness and fermented milk flavor of commercially available fermented milk beverage 2 and samples 33 to 36 were functionally evaluated by the same 5 panelists as in Working Example 2. The evaluation criteria were the same as in Working Example 2, "+" for sourness indicates that the sourness was increased by the addition of citric acid and lactic acid, and "++" for sourness indicates that the sourness was further increased by the addition of citric acid and lactic acid. In addition, "+++" for fermented milk flavor indicates that the fermented milk flavor was further enhanced.

The content of lactic acid was greater than the content of citric acid in commercially available fermented milk beverage 2. However, milky beverage sample 35, in which the content of lactic acid was greater than the content of citric acid, showed increased sourness compared to milky beverage sample 33, in which the content of citric acid was greater than the content of lactic acid. Furthermore, despite the content of citric acid and the content of lactic acid being the same as in commercially available fermented milk beverage 2, milky beverage sample 35 exhibited higher sourness and did not have a fermented milk flavor.

Sourness was suppressed and the fermented milk flavor was enhanced in milky beverage sample 34, which was obtained by adding proline to milky beverage sample 33. In addition, sourness was suppressed and the fermented milk flavor was enhanced in milky beverage sample 36, which was obtained by adding proline to milky beverage sample 35.

## Claims

1. A milky beverage comprising a low milk content of less than 3.0% of non-fat milk solids, less than 1,000,000 lactic acid bacteria or yeast cells per 1 mL and from 0.0010-0.0600 g of the amino acid proline per 100 g of the milky beverage, wherein the milky beverage does not contain amino acids other than proline.

2. The milky beverage as claimed in claim 1, which is a yogurt flavored soft drink.

3. The milky beverage as claimed in claim 1 or claim 2, which contains 0.0060-0.0300 g of the amino acid proline per 100 g of the milky beverage.

4. A method for producing a milky beverage, the method including:
(a) preparing a milky beverage material comprising no amino acid proline, and
(b) adding the amino acid proline to the milky beverage material so that the produced milky beverage contains 0.0010-0.0600 g of the amino acid proline per 100 g of the milky beverage,
wherein the produced milky beverage has a low milk content comprising less than 3.0% of non-fat milk solids, less than 1,000,000 lactic acid bacteria or yeast cells per 1 mL and does not contain amino acids other than proline.

5. The method for producing a milky beverage as claimed in claim 4, wherein the produced milky beverage is a yogurt flavoured soft drink.

6. The method for producing a milky beverage as claimed in claim 4 or claim 5, wherein the amino acid proline is added to the milky beverage material so that the produced milky beverage contains 0.0060-0.0300 g of the amino acid proline per 100 g of the milky beverage.

7. A method for improving the flavour of a milky beverage, the method comprising:
(a) preparing a milky beverage comprising a low milk content of less than 3.0% of non-fat milk solids and less than 1,000,000 lactic acid bacteria or yeast cells per 1 mL, and
(b) adding the amino acid proline to the milky beverage so that the milky beverage contains 0.0010-0.0600 g of the amino acid proline per 100 g of the milky beverage,
wherein the milky beverage does not contain amino acids other than proline.

8. The method for improving the flavour of a milky beverage as claimed in claim 7, wherein the amino acid proline is added to the milky beverage so that the milky beverage contains 0.0060-0.0300 g of the amino acid proline per 100 g of the milky beverage.

9. The method for producing a milky beverage as claimed in claim 6 or the method for improving the flavour of a milky beverage as claimed in claim 8, wherein the milky beverage is a non-carbonated beverage.

10. The method for producing a milky beverage as claimed in claim 4 or the method for improving the flavour of a milky beverage as claimed in claim 7, wherein the milky beverage is a carbonated beverage and the milky beverage contains 0.0060-0.0120 g of the amino acid proline per 100 g of milky beverage.

11. The method for improving the flavour of a milky beverage as claimed in claim 7 or claim 8, wherein the milky beverage is a yogurt flavoured soft drink.

12. The method for improving the flavour of a milky beverage as claimed in claim 7 or claim 8, wherein the milky beverage has a fermented milk flavour.

## Patentansprüche

1. Milchiges Getränk, umfassend einen geringen Milchgehalt von weniger als 3,0 % fettfreie Milchtrockenmasse, weniger als 1.000.000 Milchsäurebakterien oder Hefezellen je 1 ml und 0,0010-0,0600 g Aminosäure Prolin je 100 g milchiges Getränk, wobei das milchige Getränk keine anderen Aminosäuren als Prolin enthält.

2. Milchiges Getränk nach Anspruch 1, bei dem es sich um ein Erfrischungsgetränk mit Joghurtgeschmack handelt.

3. Milchiges Getränk nach Anspruch 1 oder Anspruch 2, das 0,0060-0,0300 g Aminosäure Prolin je 100 g milchiges Getränk enthält.

4. Verfahren zum Herstellen eines milchigen Getränks, wobei das Verfahren umfasst:
(a) Herstellen eines milchigen Getränkematerials, das keine Aminosäure Prolin umfasst, und
(b) Zugeben der Aminosäure Prolin zu dem milchigen Getränkematerial derart, dass das hergestellte milchige Getränk 0,0010-0,0600 g Aminosäure Prolin je 100 g milchiges Getränk enthält,
wobei das hergestellte milchige Getränk einen geringen Milchgehalt aufweist, umfassend weniger als 3,0 % fettfreie Milchtrockenmasse, weniger als 1.000.000 Milchsäurebakterien oder Hefezellen je 1 ml, und keine anderen Aminosäuren als Prolin enthält.

5. Verfahren zum Herstellen eines milchigen Getränks nach Anspruch 4, wobei es sich bei dem hergestellten milchigen Getränk um ein Erfrischungsgetränk mit Joghurtgeschmack handelt.

6. Verfahren zum Herstellen eines milchigen Getränks nach Anspruch 4 oder Anspruch 5, wobei die Aminosäure Prolin dem milchigen Getränkematerial derart zugegeben wird, dass das hergestellte milchige Getränk 0,0060-0,0300 g Aminosäure Prolin je 100 g milchiges Getränk enthält.

7. Verfahren zum Verbessern des Geschmacks eines milchigen Getränks, wobei das Verfahren umfasst:
(a) Herstellen eines milchigen Getränks, das einen geringen Milchgehalt von weniger als 3,0 % fettfreie Milchtrockenmasse und weniger als 1.000.000 Milchsäurebakterien oder Hefezellen je 1 ml umfasst, und
(b) Zugeben der Aminosäure Prolin zu dem milchigen Getränk derart, dass das milchige Getränk 0,0010-0,0600 g Aminosäure Prolin je 100 g milchiges Getränk enthält,
wobei das milchige Getränk keine anderen Aminosäuren als Prolin enthält.

8. Verfahren zum Verbessern des Geschmacks eines milchigen Getränks nach Anspruch 7, wobei die Aminosäure Prolin dem milchigen Getränk derart zugegeben wird, dass das milchige Getränk 0,0060-0,0300 g Aminosäure Prolin je 100 g milchiges Getränk enthält.

9. Verfahren zum Herstellen eines milchigen Getränks nach Anspruch 6 oder Verfahren zum Verbessern des Geschmacks eines milchigen Getränks nach Anspruch 8, wobei es sich bei dem milchigen Getränk um ein nicht mit Kohlensäure versetztes Getränk handelt.

10. Verfahren zum Herstellen eines milchigen Getränks nach Anspruch 4 oder Verfahren zum Verbessern des Geschmacks eines milchigen Getränks nach Anspruch 7, wobei es sich bei dem milchigen Getränk um ein mit Kohlensäure versetztes Getränk handelt und das milchige Getränk 0,0060-0,0120 g Aminosäure Prolin je 100 g milchiges Getränk enthält.

11. Verfahren zum Verbessern des Geschmacks eines milchigen Getränks nach Anspruch 7 oder Anspruch 8, wobei es sich bei dem milchigen Getränk um ein Erfrischungsgetränk mit Joghurtgeschmack handelt.

12. Verfahren zum Verbessern des Geschmacks eines milchigen Getränks nach Anspruch 7 oder Anspruch 8, wobei das milchige Getränk den Geschmack von fermentierter Milch aufweist.

## Revendications

1. Boisson lactée comprenant une faible teneur en lait de moins de 3,0 % de solides non gras du lait, moins de 1 000 000 de bactéries ou de cellules de levure d'acide lactique par 1 mL et de 0,0010 à 0,0600 g de l'acide aminé proline par 100 g de la boisson lactée, la boisson lactée ne contenant pas d'autres acides aminés que la proline.

2. Boisson lactée selon la revendication 1, qui est une boisson non alcoolisée aromatisée au yogourt.

3. Boisson lactée selon la revendication 1 ou la revendication 2, qui contient 0,0060 à 0,0300 g de l'acide aminé proline par 100 g de la boisson lactée.

4. Procédé pour la production d'une boisson lactée, le procédé comprenant :
(a) la préparation d'une matière pour boisson lactée ne comprenant pas d'acide aminé proline, et
(b) l'ajout de l'acide aminé proline à la matière pour boisson lactée de sorte que la boisson lactée produite contienne 0,0010 à 0,0600 g de l'acide aminé proline par 100 g de la boisson lactée,
la boisson lactée produite ayant une faible teneur en lait de moins de 3,0 % de solides non gras du lait, moins de 1 000 000 de bactéries ou de cellules de levure d'acide lactique par 1 mL et ne contenant pas d'autres acides aminés que la proline.

5. Procédé pour la production d'une boisson lactée selon la revendication 4, la boisson lactée produite étant une boisson non alcoolisée aromatisée au yogourt.

6. Procédé pour la production d'une boisson lactée selon la revendication 4 ou la revendication 5, l'acide aminé proline étant ajouté à la matière pour boisson lactée de sorte que la boisson lactée produite contienne 0,0060 à 0,0300 g de l'acide aminé proline par 100 g de la boisson lactée.

7. Procédé pour l'amélioration de l'arôme d'une boisson lactée, le procédé comprenant :
(a) la préparation d'une boisson lactée comprenant une faible teneur en lait de moins de 3,0 % de solides non gras du lait et moins de 1 000 000 de bactéries ou de cellules de levure d'acide lactique par 1 mL, et
(b) l'ajout de l'acide aminé proline à la boisson lactée de sorte que la boisson lactée contienne 0,0010 à 0,0600 g de l'acide aminé proline par 100 g de la boisson lactée,
la boisson lactée ne contenant pas d'autres acides aminés que la proline.

8. Procédé pour l'amélioration de l'arôme d'une boisson lactée selon la revendication 7, l'acide aminé proline étant ajouté à la boisson lactée de sorte que la boisson lactée contienne 0,0060 à 0,0300 g de l'acide aminé proline par 100 g de la boisson lactée.

9. Procédé pour la production d'une boisson lactée selon la revendication 6 ou procédé pour l'amélioration de l'arôme d'une boisson lactée selon la revendication 8, la boisson lactée étant une boisson non carbonatée.

10. Procédé pour la production d'une boisson lactée selon la revendication 4 ou procédé pour l'amélioration de l'arôme d'une boisson lactée selon la revendication 7, la boisson lactée étant une boisson gazeuse et la boisson lactée contenant 0,0060 à 0,0120 g de l'acide aminé proline par 100 g de la boisson lactée.

11. Procédé pour l'amélioration de l'arôme d'une boisson lactée selon la revendication 7 ou la revendication 8, la boisson lactée étant une boisson non alcoolisée aromatisée au yogourt.

12. Procédé pour l'amélioration de l'arôme d'une boisson lactée selon la revendication 7 ou la revendication 8, la boisson lactée ayant un arôme de lait fermenté.
